# FASCICULE DE BREVET EUROPEEN

(11) **EP 2 552 624 B1**
(45) Date de publication et mention de la délivrance du brevet: **26.02.2014**
(21) Numéro de dépôt: 11714357.8
(22) Date de dépôt: 16.03.2011
(51) Int. Cl.: B22C 9/28, B29C 33/42, B60B 1/08, B60B 3/06, B22D 18/04

(54) **ROUE DE VEHICULE EN ALLIAGE D'ALUMINIUM MOULE COMPORTANT UN MOTIF DE STYLE, PROCEDE D'OBTENTION D'UNE TELLE ROUE ET MOULE UTILISE PAR LE PROCEDE**
FAHRZEUGRAD AUS EINER GEFORMTEN ALUMINIUMLEGIERUNG MIT STILISIERTER STRUKTUR, VERFAHREN ZUR HERSTELLUNG EINES DERARTIGEN RADS UND BEI DIESEM VERFAHREN VERWENDETE FORM
MOLDED ALUMINUM ALLOY VEHICLE WHEEL COMPRISING A STYLIZED PATTERN, METHOD FOR OBTAINING SUCH A WHEEL AND MOLD USED BY SAID METHOD

(30) Priorité: 31.03.2010 FR 1052383
(43) Date de publication de la demande: 06.02.2013
(73) Titulaire: Peugeot Citroën Automobiles SA, 78140 Vélizy Villacoublay (FR)
(72) Inventeur: BANCTEL, Thomas, F-92100 Boulogne Billancourt (FR); MATTHEWS, Robert, F-78940 La Queue lez Yvelines (FR)
(86) Numéro de dépôt international: PCT/FR2011/050526
(87) Numéro de publication internationale: WO 2011/124796

(56) Documents cités:
- EP-A2- 2 145 708
- FR-A- 797 491
- JP-A- 2006 306 396

## Description

La présente invention se rapporte à une roue de véhicule, notamment de véhicule automobile, et plus particulièrement à une roue en alliage d'aluminium moulé comportant un motif de style réalisé dans le même procédé de moulage que la roue, comme révélé dans EP2145708A et correspondant au préambule de la revendication 1.

De telles roues sont réalisées classiquement à partir d'un procédé de moulage basse pression d'un alliage d'aluminium liquide.

Dans la suite de la description, nous définirons une roue par sa jante (la partie périphérique de la roue), le moyeu (la partie centrale de la roue) et les rayons de roue ou bras (les parties reliant la jante au moyeu) qui participent au style de la roue.

Les formes générales des bras des roues en alliage d'aluminium représentent des surfaces globalement lisses avec au maximum une strie.

Les trop petites dimensions de la strie (largeur, profondeur) sont prohibées pour des procédés standards de moulage basse pression.

De même, la succession de stries de petites dimensions (largeur, profondeur) est très difficilement réalisable et répétable industriellement avec un tel procédé.

La réalisation de motifs sur la face visible, appelée également face de style, d'une roue en alliage d'aluminium doit respecter un certain nombre de règles du métier de la fonderie. Ces règles sont indispensables pour garantir une faisabilité technique de tels motifs : faisabilité du démoulage, état de surface satisfaisant, longévité du moyen de production, ... Ceci impose des rayons minimum pour toutes les arêtes des motifs reproduits en relief sur la face de style et des angles de dépouille minimum (par rapport à l'axe de la roue) des motifs pour permettre le démoulage de la roue.

Typiquement, la tolérance de forme sur une surface moulée basse pression est de ± 0,8mm.

La présente invention concerne une roue en alliage d'aluminium dont la face visible, ou face de style, comporte un motif constitué d'une succession de stries de petites dimensions et petites profondeurs, obtenues grâce à une opération unique de moulage basse pression maîtrisée et reproductible.

La disposition et la finesse des stries sont importantes pour optimiser l'effet stylistique de la roue.

La réalisation d'une succession de stries de petite dimension est très difficile à obtenir industriellement du fait de l'usure de moule, du remplissage des stries par le potteyage avant fonderie et/ou par l'apprêt et/ou par la peinture et/ou par le vernis.

On connaît, notamment du document FR 2 548 082, un procédé de moulage utilisant un moule pour mouler un dessus de roue ayant des parties en forme de rayons de type roue de vélo.

On connaît également du document CN104450439, un procédé de fabrication d'une roue en alliage d'aluminium utilisant un moule dans lequel est coulé l'alliage d'aluminium liquide et un moyen d'extrusion permettant de créer la forme extérieure finale de la roue.

Aucun de ces documents ne divulgue un procédé de moulage permettant d'obtenir en une seule opération de moulage, un motif constitué d'une succession de stries sur la face de style de la roue, et dont les dimensions sont du même ordre de grandeur que les tolérances de forme typiques obtenues avec un procédé de moulage basse pression de ± 0,8mm.

Aucun de ces documents ne se préoccupe de la longévité du moule, garantissant la reproduction fidèle du motif dans le temps, ni de la finesse du motif final pour tenir compte à la fois de l'usure du moule et des traitements de surface du motif après moulage : applications successives d'une couche d'apprêt, de peinture et d'un vernis.

A cet effet, l'invention a pour premier objet une roue en alliage d'aluminium, notamment une roue de véhicule automobile, comportant au moins un motif de style reproduit sur au moins une face de la roue, ladite roue étant caractérisée en ce que le motif comporte une pluralité de stries successives parallèles s'étendant selon une direction sensiblement circonférentielle par rapport au centre de la roue et dont les dimensions sont du même ordre de grandeur que les tolérances de forme obtenues avec un procédé de moulage basse pression ; la roue et le motif à stries successives étant réalisés par une seule et même opération de moulage basse pression.

Selon une caractéristique, les stries ont une profondeur maximale de 0,8 mm avec un rayon minimal au sommet de 2 mm.

Selon une autre caractéristique, la distance séparant un sommet d'un creux de strie est comprise entre environ 2,3 mm et 2,7 mm pour un angle de raccordement d'un sommet à un creux respectivement compris entre environ 145° et 155°.

L'invention a également pour objet une roue conforme à celle décrite ci-dessus, comportant une partie périphérique appelée jante et une partie centrale appelée moyeu, et une pluralité de rayons appelés bras, reliant la jante au moyeu, ladite roue étant caractérisée en ce que le motif est reproduit sur un moins une première face frontale d'au moins un bras de la roue.

Selon une caractéristique, la face frontale du bras comporte un évasement dont la largeur augmente progressivement à partir d'une distance déterminée du moyeu jusqu'à la jante ; le motif à stries successives étant reproduit sur cet évasement.

Selon une autre caractéristique, les stries recouvrent complètement ledit évasement.

Selon une autre caractéristique, le nombre de bras est pair et le motif à stries successives est reproduit et répété sur un bras sur deux.

Selon une autre caractéristique, le motif à stries successives se prolonge sur une deuxième face du bras qui est sensiblement perpendiculaire à la première face frontale.

L'invention a également pour objet un procédé d'obtention d'une roue telle que décrite ci-dessus, ledit procédé étant caractérisé en ce qu'il consiste à :
- couler un alliage d'aluminium liquide dans un moule pour moulage basse pression de la roue ; le moule comportant le profil en négatif du motif à stries successives et respectant des angles de dépouille au minimum de 7° ;
- retirer la roue du moule ;
- contrôler les dimensions des stries obtenues après moulage de la roue avant tout traitement ; et
- contrôler régulièrement l'état d'usure du moule avant un nouveau moulage de roue.

Enfin, l'invention a également pour objet un moule utilisé par le procédé ci-dessus, pour le moulage basse pression de la roue décrite précédemment, ledit moule étant caractérisé en ce qu'il comporte un profil en négatif des stries dont les dimensions sont de l'ordre des tolérances de moulage basse pression d'alliage d'aluminium, avec des angles de dépouille au minimum de 7°.

D'autres caractéristiques et avantages de l'invention apparaîtront plus clairement à la lecture de la description faite ci-dessous, cette dernière étant effectuée à titre descriptif et non limitatif en faisant référence aux figures introduites ci-après sur lesquelles :
- les figures 1 et 2 sont des vues partielles d'une roue de véhicule automobile selon l'invention ; et
- la figure 3 est une vue de détail en coupe radiale d'un motif de la roue selon l'invention.

Sur les figures, les mêmes éléments sont désignés par les mêmes repères.

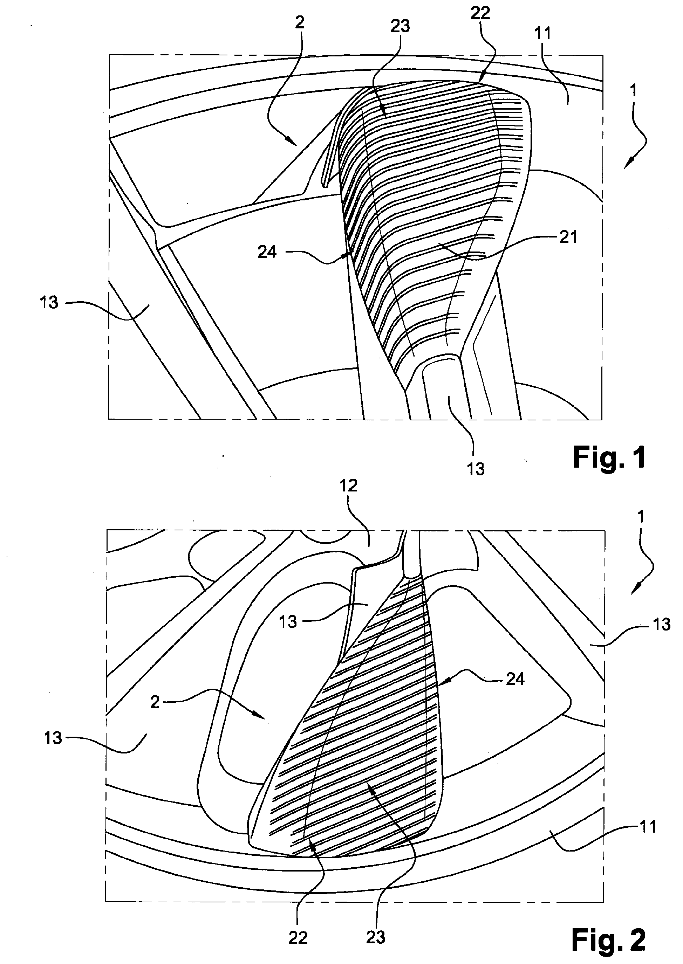

Les figures 1 et 2 illustrent respectivement une vue de face d'une roue 1 en alliage d'aluminium comportant un motif 2 réalisé sur la face visible, ou face frontale 23 de la roue 1, désignée également par les termes "face de style".

Cette roue 1 comporte une jante 11, correspondant à la partie périphérique de la roue 1 destinée à supporter un pneumatique, un moyeu 12 correspondant à la partie centrale de la roue 1, et une pluralité de rayons 13, appelés également bras, s'étendant radialement entre la jante 11 et le moyeu 12.

La roue 1 peut comporter un nombre variable de bras 13 qui peut être pair ou impair. Le nombre de bras 13, la forme et les dimensions des bras 13 sont très variables d'une roue aluminium à une autre. Le choix des roues et donc du style des roues est soit proposé en première monte par les constructeurs, soit en seconde monte par les fabricants de roues.

Les roues participent grandement à l'aspect de style global du véhicule. Ainsi, l'aspect extérieur des roues devient un signe distinctif d'un modèle de véhicule voire même d'une marque automobile.

Certains choix de style décidés par les bureaux de style d'une marque automobile, demandent des prouesses technologiques en matière de fabrication pour les techniciens qui sont tenus par un ensemble de règles de métier comme notamment celles du métier de la fonderie et en particulier celles du moulage basse pression d'alliage d'aluminium.

Le motif 2 représenté sur les figures 1 et 2 est le résultat des contraintes imposées par le style, à savoir :
- ménager une succession de stries 21 parallèles de faible dimension à la surface des bras 13 de la roue 1 pour donner un nouvel aspect visuel différenciant ; et
- tenir compte des contraintes imposées par les règles du métier de fonderie.

Le nombre de stries 21 doit être suffisant pour obtenir l'effet de style recherché, ce qui impose une profondeur et des rayons des stries 21 très précises.

Or, les dimensions satisfaisant les impératifs de style sont à la limite des tolérances dimensionnelles des pièces obtenues pas fonderie basse pression : le dimensionnement souhaité pour les stries 21 étant sensiblement du même ordre de grandeur que les tolérances de forme des pièces réalisées en aluminium moulé.

Une autre contrainte liée au moulage, est de pouvoir retirer la roue 1 du moule après l'opération de moulage.

Parmi d'autres contraintes, il faut citer la prise en compte de l'usure du moule (ce qui impose une maintenance régulière du moule), le remplissage par le potteyage avant fonderie ainsi que les différents traitements après moulage : apprêt, peinture et vernis qui viennent remplir partiellement les creux des stries 21 et qui risquent à terme de combler les creux stries 21 et annuler l'effet de style recherché.

Ainsi, en tenant compte de tous les impératifs de style, de fonderie et de traitements après moulage de la roue, les dimensions optimales des stries 21 du motif 2 selon l'invention ont été déterminées précisément pour arriver au dimensionnement suivant : la profondeur des stries est de 0,8 mm et le rayon minimum des stries est de 2 mm.

Pour répondre aux contraintes de démoulage, contraintes qui sont durcies quand le motif 2 à stries 21 se prolonge sur une face 24 du bras 13 qui est sensiblement perpendiculaire à la face frontale 23 de la roue (Fig. 1), l'orientation des stries 21 a été déterminée pour pouvoir démouler la roue 1 sans difficulté. Pour cela, les stries 21 s'étendent selon une direction sensiblement circonférentielle par rapport au centre de la roue 1 avec des angles de dépouille par rapport à l'axe de la roue au minimum de 7°.

L'effet de style est également accentué par la disposition particulière et la répétition du même motif 21 sur les bras 13.

Ainsi, le même motif 21 peut être reproduit sur tous les bras 13 ou sur un bras 13 sur deux quand le nombre de bras 13 est pair.

Le motif 2 peut être également reproduit sur une ou sur les deux faces 23, 24 d'un bras 13.

Tel que représenté sur les figures 1 et 2, le bras 13 présente un évasement 22 dont la largeur augmente progressivement à partir d'une certaine distance du moyeu 12 jusqu'à la jante 11 suivant une courbure douce (ou galbe) s'étendant selon une direction sensiblement radiale.

Le motif 2 est reproduit sur cet évasement 22. La longueur des stries 21 s'allonge progressivement en suivant l'élargissement progressif de l'évasement 22.

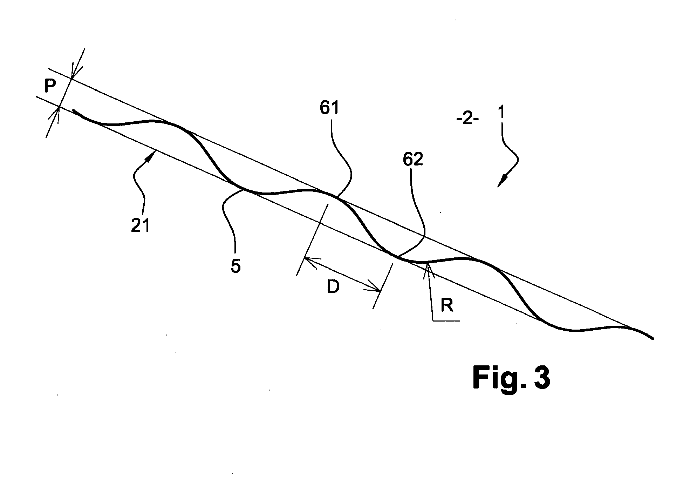

La figure 3 illustre, par une vue de détail en coupe radiale de la roue 1, le motif 2 à stries successives 21, obtenu après moulage basse pression en respectant les contraintes de dimension et de contrôle imposées ci-dessus.

La ligne de crête passant par la succession de stries 21 définit une ligne ondulée (ou sinusoïde aplatie) 5 après application successive d'un apprêt, d'une peinture et d'un vernis. Chacune des couches ayant une épaisseur de l'ordre d'une centaine de microns.

La profondeur P des stries 21 est matérialisée par la distance séparant les deux lignes passant respectivement par les creux 61 et les sommets 62 des stries 21. Cette profondeur P est au maximum de 0,8 mm.

Le rayon R d'une strie 21, considéré à son sommet 62, est au minimum de 2 mm.

La distance D séparant un creux 61 d'un sommet 62 adjacent est comprise entre 2,3 mm et 2,7 mm correspondant respectivement à un rayon de raccordement entre un creux 61 et un sommet 62 adjacent de 145° à 155°.

Ainsi, avec des préconisations géométriques strictes et un contrôle régulier des dimensions des stries 21 et de l'usure du moule de fonderie, il est possible d'obtenir, de manière reproductible, à faible cadencement, des roues comportant des motifs constitués de stries successives de petite dimension qui sont du même ordre de grandeur que les tolérances de moulage basse pression d'alliage d'aluminium en respectant le procédé dont les principales étapes consistent à :
- couler un alliage d'aluminium liquide dans un moule pour moulage basse pression de la roue, le moule comportant le profil en négatif du motif à stries successives et respectant des angles de dépouille au minimum de 7° ;
- retirer la roue du moule ;
- contrôler les dimensions des stries obtenues après moulage avant tout traitement ; et
- contrôler régulièrement l'état d'usure du moule avant un nouveau moulage.

## Revendications

1. Roue (1) en alliage d'aluminium, notamment roue de véhicule automobile, comportant au moins un motif de style (2) reproduit sur au moins une face (23) de la roue (1), **caractérisée en ce que** le motif (2) comporte une pluralité de stries successives parallèles (21) s'étendant selon une direction sensiblement circonférentielle par rapport au centre de la roue (1) et dont les dimensions sont du même ordre de grandeur que les tolérances de forme obtenues avec un procédé de moulage basse pression ; la roue (1) et le, motif (2) à stries successives (21) étant réalisés par une seule et même opération de moulage basse pression.

2. Roue (1) selon la revendication précédente, caractérisée en ce les stries (21) ont une profondeur maximale (P) de 0,8 mm avec un rayon minimal (R) au sommet (62) de 2 mm.

3. Roue (1) selon la revendication précédente, **caractérisée en ce que** la distance (D) séparant un sommet (62) d'un creux (61) de strie (21) est comprise entre environ 2,3 mm et 2,7 mm pour un angle de raccordement d'un sommet (62) à un creux (61) respectivement compris entre environ 145° et 155°.

4. Roue (1) selon l'une des revendications précédentes, du type comportant une partie périphérique appelée jante (11) et une partie centrale appelée moyeu (12), et une pluralité de rayons appelés bras (13), reliant la jante (11) au moyeu (12), **caractérisée en ce que** le motif (2) est reproduit sur un moins une première face frontale (23) d'au moins un bras (13) de la roue (1).

5. Roue (1) selon la revendication précédente, **caractérisée en ce que** la face frontale (23) du bras (13) comporte un évasement (22) dont la largeur augmente progressivement à partir d'une distance déterminée du moyeu (12) jusqu'à la jante (11) ; le motif (2) à stries successives (21) étant reproduit sur cet évasement (22).

6. Roue (1) selon la revendication précédente, **caractérisée en ce que** les stries (21) recouvrent complètement ledit évasement (22).

7. Roue (1) selon l'une des revendications 4 à 6, **caractérisée en ce que** le nombre de bras (13) est pair et **en ce que** le motif (2) à stries successives (21) est reproduit et répété sur un bras (13) sur deux.

8. Roue (1) selon l'une des revendications 4 à 7, **caractérisé en ce que** le motif (2) à stries successives (21) se prolonge sur une deuxième face (24) du bras (13) qui est sensiblement perpendiculaire à la première face frontale (23).

9. Procédé d'obtention d'une roue (1) selon l'une des revendications précédentes, **caractérisé en ce qu'**il consiste à :
- couler un alliage d'aluminium liquide dans un moule pour moulage basse pression de la roue (1) ; le moule comportant le profil en négatif du motif (2) à stries successives (21) et respectant des angles de dépouille au minimum de 7° ;
- retirer la roue (1) du moule ;
- contrôler les dimensions des stries (21) obtenues après moulage de la roue (1) avant tout traitement ; et
- contrôler régulièrement l'état d'usure du moule avant un nouveau moulage de roue (1).

10. Moule utilisé par le procédé selon la revendication précédente, pour le moulage basse pression de la roue (1) selon l'une des revendications 1 à 8 , **caractérisé en ce qu'**il comporte un profil en négatif des stries (21) dont les dimensions sont de l'ordre des tolérances de moulage basse pression d'alliage d'aluminium, avec des angles de dépouille au minimum de 7°.

## Patentansprüche

1. Rad (1) aus einer Aluminiumlegierung, vor allem ein Kraftfahrzeugrad, umfassend zumindest ein Stilmotiv (2), das auf zumindest einer Seite (23) des Rades (1) abgebildet ist, **dadurch gekennzeichnet, dass** das Motiv (2) eine Vielzahl von aufeinander folgenden parallelen Riefen (21) umfasst, die sich in eine im Verhältnis zur Radmitte (1) in etwa umlaufende Richtung erstrecken, und deren Abmessungen dieselbe Größenordnung aufweisen, wie die Formtoleranzen, die man mit einem Niederdruckformverfahren erhält; Rad (1) und Motiv (2) mit den aufeinander folgenden Riefen (21) werden dabei durch ein und denselben Niederdruckformvorgang erzeugt.

2. Rad (1) nach dem vorherigen Anspruch, **dadurch gekennzeichnet, dass** die Riefen (21) eine maximale Tiefe (P) von 0,8 mm mit einem Mindestradius (R) am Scheitel (62) von 2 mm aufweisen.

3. Rad (1) nach dem vorherigen Anspruch, **dadurch gekennzeichnet, dass** der Abstand (D) zwischen einem Scheitel (62) und einer Mulde (61) der Riefe (21) zwischen etwa 2,3 mm und 2,7 mm liegt, bei einem Verbindungswinkel zwischen einem Scheitel (62) und einer Mulde (61) jeweils zwischen etwa 145° und 155°.

4. Rad (1) nach einem der vorherigen Ansprüche, umfassend einen peripheren Abschnitt, der Felge (11) genannt wird, und einen mittleren Abschnitt, der Nabe (12) genannt wird, sowie eine Vielzahl von Speichen, die Arme (13) genannt werden, die die Felge (11) mit der Nabe (12) verbinden, **dadurch gekennzeichnet, dass** das Motiv (2) auf zumindest einer ersten Vorderseite (23) zumindest eines Armes (13) des Rades (1) abgebildet ist.

5. Rad (1) nach dem vorherigen Anspruch, **dadurch gekennzeichnet, dass** die Vorderseite (23) des Armes (13) eine Aufweitung (22) umfasst, deren Breite sich progressiv ab einem bestimmten Abstand von der Nabe (12) bis zur Felge (11) vergrößert; das Motiv (2) mit aufeinander folgenden Riefen (21) wird dabei auf dieser Aufweitung (22) abgebildet.

6. Rad (1) nach dem vorherigen Anspruch, **dadurch gekennzeichnet, dass** die Riefen (21) die besagte Aufweitung (22) vollständig bedecken.

7. Rad (1) nach einem der Ansprüche 4 bis 6, **dadurch gekennzeichnet, dass** die Anzahl der Arme (13) eine gerade Zahl ist, und dadurch, dass das Motiv (2) mit den aufeinander folgenden Riefen (21) auf jedem zweiten Arm (13) abgebildet und wiederholt wird.

8. Rad (1) nach einem der Ansprüche 4 bis 7, **dadurch gekennzeichnet, dass** sich das Motiv (2) mit den aufeinander folgenden Riefen (21) auf einer zweiten Seite (24) des Armes (13) fortsetzt, die in etwa senkrecht zur ersten Vorderseite (23) verläuft.

9. Verfahren zum Erhalt eines Rades (1) nach einem der vorherigen Ansprüche, **dadurch gekennzeichnet, dass** es darin besteht:
- eine flüssige Aluminiumlegierung zum Niederdruckformen des Rades (1) in eine Form zu füllen; die Form enthält dabei das negative Profil des Motivs (2) mit den aufeinander folgenden Riefen (21) und unter Berücksichtigung der Freiwinkel von mindestens 7°;
- das Rad (1) aus der Form zu nehmen;
- die Abmessungen der Riefen (21) zu prüfen, die man nach dem Formen des Rades (1) vor jeder Bearbeitung erhält; und
- regelmäßig den Verschleißzustand der Form vor einer neuen Radformung (1) zu prüfen.

10. Form, die vom Verfahren nach dem vorherigen Anspruch für das Niederdruckformen des Rades (1) nach einem der Ansprüche 1 bis 8 verwendet wird, **dadurch gekennzeichnet, dass** sie ein negatives Profil der Riefen (21) umfasst, dessen Abmessungen dieselbe Größenordnung aufweisen, wie die Formtoleranzen, die man mit einem Niederdruckformverfahren erhält, mit Freiwinkeln von mindestens 7°.

## Claims

1. Aluminium alloy wheel (1), in particular a motor vehicle wheel, comprising at least one stylized pattern (2) that is reproduced on at least one surface (23) of the wheel (1), **characterised in that** the pattern (2) comprises a plurality of parallel consecutive ridges (21) that extend in a substantially circumferential direction relative to the centre of the wheel (1) and the size of which is on the same order of magnitude as the shape tolerances obtained using a low-pressure moulding method; the wheel (1) and the pattern (2) with consecutive ridges (21) produced by means of a single low-pressure moulding operation.

2. Wheel (1) as claimed in the preceding claim, **characterised in that** the ridges (21) have a maximum depth (P) of 0.8 mm with a minimum radius (R) at the peak (62) of 2 mm.

3. Wheel (1) as claimed in the preceding claim, **characterised in that** the distance (D) separating a peak (62) from a trough (61) of a ridge (21) is between about 2.3 mm and 2.7 mm for an angle for connecting a peak (62) to a trough (61) respectively between about 145 ° and 155°.

4. Wheel (1) according to one of the preceding claims, of the type comprising a peripheral portion called rim (11) and a central portion called hub (12), and a plurality of radiuses called arms (13), connecting the rim (11) to the hub (12), **characterised in that** the pattern (2) is reproduced on at least one first front surface (23) of at least one arm (13) of the wheel (1).

5. Wheel (1) as claimed in the preceding claim, **characterised in that** the front surface (23) of the arm (13) comprises a flaring (22) of which the width increases progressively starting from a determined distance from the hub (12) to the rim (11); the pattern (2) with consecutive ridges (21) being reproduced on this flaring (22).

6. Wheel (1) as claimed in the preceding claim, **characterised in that** the ridges (21) fully cover said flaring (22).

7. Wheel (1) according to one of claims 4 to 6, **characterised in that** the number of arms (13) is an even number and **in that** the pattern (2) with consecutive ridges (21) is reproduced and repeated on one arm (13) out of two.

8. Wheel (1) according to one of claims 4 to 7, **characterised in that** the pattern (2) with consecutive ridges (21) is extended over a second surface (24) of the arm (13) which is substantially perpendicular to the first front surface (23).

9. Method for obtaining a wheel (1) according to one of the preceding claims, **characterised in that** it consists in:
- pouring a liquid aluminium alloy into a mould for the low-pressure moulding of the wheel (1); with the mould comprising the negative profile of the pattern (2) with consecutive ridges (21) and complying with the draft angles with a minimum of 7°;
- removing the wheel (1) from the mould;
- checking the dimensions of the ridges (21) obtained after moulding of the wheel (1) before any treatment; and
- checking the condition of wear and tear on the mould on a regular basis before another moulding of a wheel (1).

10. Mould used by the method as claimed in the preceding claim, for the low-pressure moulding of the wheel (1) according to one of claims 1 to 8, **characterised in that** it comprises a negative profile of the ridges (21) the dimensions of which are about the tolerances for low-pressure moulding of aluminium alloy, with draft angles of a minimum of 7°.
